# EUROPEAN PATENT SPECIFICATION

(11) **EP 3 249 265 B1**
(45) Date of publication and mention of the grant of the patent: **08.12.2021**
(21) Application number: 15878863.8
(22) Date of filing: 25.09.2015
(51) Int. Cl.: F16H 63/32, F16H 63/30

(54) **SHIFT FORK MODULE**
SCHALTGABELMODUL
MODULE DE FOURCHETTE DE DÉBRAYAGE

(30) Priority: 21.01.2015 JP 2015009060
(43) Date of publication of application: 29.11.2017
(73) Proprietor: Atsumitec Co., Ltd., Hamamatsu-shi, Shizuoka 433-8118 (JP)
(72) Inventor: MATSUDA, Kenji, Hamamatsu-shi Shizuoka 433-8118 (JP); HOSODA, Kazufumi, Hamamatsu-shi Shizuoka 433-8118 (JP); HADA, Masatoshi, Nagoya-shi Aichi 456-8601 (JP); TAKAI, Hirofumi, Nagoya-shi Aichi 456-8601 (JP)
(74) Representative: Cohausz & Florack
(86) International application number: PCT/JP2015/077154
(87) International publication number: WO 2016/117174

(56) References cited:
- EP-A2- 1 342 941
- DE-A1- 10 016 364
- JP-A- S6 192 926
- JP-A- S56 134 666
- JP-A- 2008 534 890
- US-A- 4 583 418
- None

## Description

### Field of the Invention

The present invention relates to a transmission comprising a gear module and a shift fork module with the shift fork module to be mounted on the gear module to complete a transmission.

### Description of Background Art

For example as disclosed in Patent Document 1 below, there is a transmission of the prior art comprising a transmission case, an input shaft, an output shaft and a counter shaft supported by the transmission case, a gear train of the 1^{st} through 6^{th} speeds for transmitting the driving power from the input shaft to the output shaft via the counter shaft, a plurality of synchronizing mechanisms for switching the gear train from the 1^{st} speed to the 6^{th} speed, a plurality of shift forks engaged with respective sleeves of the synchronizing mechanisms, fork rods for supporting respective shift forks, and covers for closing an opening formed on the transmission case.

According to the transmission of the prior art document JP 2006-234010, it is previously obtained a subassembly (gear module) by assembling an input shaft having a gear train of the 1^{st} through 6^{th} speeds and synchronizing mechanisms, an output shaft and a counter shaft to transmission case and a subassembly (shift fork module) by assembling shift forks and fork rods to a cover. Then the cover-side subassembly is assembled to the transmission-side subassembly so as to close an opening. This enables to improve the assembly workability of the transmission since respective shift forks can be engaged correspondingly with sleeves of the plurality of synchronizing mechanisms.

### Document of Prior Art

### Patent Document

Prior art document JP S61 92926 A relates to a transmission with a gear module and a shift fork module, wherein driving power of a driving source of a vehicle is inputted to the gear module. The gear module of this prior art has several forward drive gears and one reverse drive gear.

### Disclosure of the Invention

### Problems to be solved by the Invention

However, the prior art is insufficient in assembly workability in following points. In usual, the transmission comprises a reverse lever for moving a reverse idle gear to mate with a driving gear and a driven gear when gear shifted to the reverse stage, and an operation member mounted on any one of shift fork shafts for operating the reverse lever to move the reverse idle gear. Such a reverse lever is assembled under conditions in which one end of the reverse lever is engaged with the reverse idle gear and the other end of the reverse lever is connected to the operation member and is able to switch the reverse idle gear due to operation of the operation member between a state in which the reverse idle gear is mated with the reverse drive gear and the reverse driven gear (state able to reverse) and a state in which the reverse idle gear is not mated state with the reverse drive gear and the reverse driven gear.

Accordingly, in the prior art for completing the transmission by mounting the shift fork module on the gear module, since it is necessary for an operator to simultaneously perform two assembling operations of one end and the other end of the reverse lever such that one end of the reverse lever is connected to the operation member of the shift fork module with engaging the other end of the reverse lever with the reverse idle gear of the gear module, the assembly workability would be worsened.

It is, therefore, an object of the present invention to provide a transmission comprising a gear module and a shift fork module, wherein the shift fork module can easily assemble the reverse lever to the reverse idle gear of the gear module and thus improve the workability of assembling the shift fork module to the gear module.

### Means for solving problems

For achieving the object mentioned above, there is provided, according to the present invention of claim 1, a transmission comprising a gear module and a shift fork module with the shift fork module to be mounted on the gear module to complete a transmission in which the gear module comprises a 1^{st} shaft to which a driving power of a driving source of a vehicle is inputted and having a plurality of forward drive gears of different diameters corresponding to gear ratios and a reverse drive gear; a 2^{nd} shaft having a plurality of forward driven gears and a reverse driven gear respectively mating with the forward drive gears and the reverse drive gear; a plurality of stator members for selectably synchronizing the forward drive gears or reverse driven gear for transmitting the driving power from the 1^{st} shaft to the 2^{nd} shaft; and a 3^{rd} shaft having a reverse idle gear which can be mated with the reverse drive gear and reverse driven gear when performing a gear shift operation to a reverse stage and transmit the reversed driving rotation to the 2^{nd} shaft; the 1^{st} shaft, the 2^{nd} shaft and the 3^{rd} shaft being supported by a case member formed by a second case member element assembled to a first case member element, wherein the shift fork module comprises a plurality of shift fork shafts which are provided with shift forks engageable with respective stator members and can select the forward drive gears and forward driven gears transmitting the driving power from the 1^{st} shaft to the 2^{nd} shaft by moving the stator members to any one of the forward drive gears and forward driven gears when performing a gear shift operation; an operation member mounted on the shift fork shaft and operating when performing a gear shift operation to the reverse stage; a reverse lever connected to the operation member, one end of the reverse lever engaging the reverse idle gear when assembled to the gear module, and the reverse lever being able to switch the reverse idle gear between a state in which it is mated with the reverse drive gear and the reverse driven gear and a state in which it is not mated with the reverse drive gear and the reverse driven gear; and a base member for slidably supporting the shift fork shafts, wherein the base member is mounted on the second case member element of the case member, wherein the base member is formed with a guiding groove, wherein the guiding groove is able to engage a projection formed on a mounting surface of the gear module for mounting the base member and structured to guide and position the base member at a predetermined position when the shift fork module is assembled to the gear module, wherein an upper surface of an edge portion of the second case member element is formed so that it is flush with the mounting surface of the base member; and wherein the reverse lever is rotationally mounted on a mounting plate and the mounting plate is secured on the base member.

According to the present invention of claim 2, there is provided a transmission of claim 1 wherein the reverse lever is rotationally supported on the base member and switches the reverse idle gear between a state in which it is mated with the reverse drive gear and the reverse driven gear and a state in which it is not mated with the reverse drive gear and the reverse driven gear due to a rotational swing motion of the reverse lever caused by the operation member.

According to the present invention of claim 3, there is provided a transmission of claim 2 wherein the operation member is mounted on a high speed stage shift fork shaft of the shift fork shafts on which a shift fork for highest speed stage is mounted and moved to one axial direction of the high speed stage shift fork shaft when the gear shift operation is performed to the reverse stage and on the contrary moved to the other axial direction of the high speed stage shift fork shaft when the gear shift operation is performed to the highest speed stage; and the reverse lever is so constituted that it is rotationally swung to switch the reverse idle gear between a state in which it is mated with the reverse drive gear and the reverse driven gear and a state in which it is not mated with the reverse drive gear and the reverse driven gear when the operation member is moved to said one axial direction and that it is not rotationally swung when the operation member is moved to said other axial direction.

According to the present invention of claim 4, there is provided a transmission of any one of claims 1 to 3 wherein a moderation means is arranged between the reverse lever and the base member for applying moderation feeling of the rotational swing motion of the reverse lever.

According to the present invention of claim 5, there is provided a transmission of any one of claims 1 to 4 wherein the shift fork shafts are provided with respective engagement portions which can engage a gear shift member of the transmission in accordance with the gear shift operation and also provided with a holding member for covering the side faces of the engagement portions to hold it at a predetermined position.

According to the present invention of claim 6, there is provided a transmission of claim 1 wherein a moderation mechanism is mounted on the base member, the moderation mechanism comprises positioning means for positioning the axial positions of the shift fork shafts with the positioning means being fitted in recesses formed on predetermined positions of the shift fork shafts and urging means for normally urging the positioning means toward the shift fork shafts, and wherein said mounting plate is mounted on the base member so as to prevent the urging means from being fallen off.

### Effects of the invention

According to the present invention of claim 1, since the reverse lever is mounted on the shift fork module under a connected state to the operation member mounted on the shift fork shaft, it is possible to make engagement of the plurality of shift forks with corresponding stator members (synchronizing apparatus) and also engagement of the reverse lever with the idle reverse gear when assembling the shift fork module to the gear module to complete the transmission. Accordingly, it is possible to improve the assembly workability of the shift fork module relative to the gear module.

According to the present invention of claim 2, since the reverse lever is rotationally supported on the base member and switches the reverse idle gear between a state in which the reverse lever is mated with the reverse drive gear and the reverse driven gear and a state in which the reverse lever is not mated with the reverse drive gear and the reverse driven gear due to a rotational swing motion caused by the operation member, operation of the reverse lever can be attained by a simple structure.

According to the present invention of claim 3, since the operation member is mounted on a high speed stage shift fork shaft of the shift fork shafts on which a shift fork for highest speed stage is mounted and moved to one axial direction of the high speed stage shift fork shaft when the gear shift operation is performed to the reverse stage and on the contrary moved to the other axial direction of the high speed stage shift fork shaft when the gear shift operation is performed to the highest speed stage; and the reverse lever is so constituted that it is rotationally swung to switch the reverse idle gear between a state in which it is mated with the reverse drive gear and the reverse driven gear and a state in which it is not mated with the reverse drive gear and the reverse driven gear when the operation member is moved to said one axial direction and that it is not rotationally swung when the operation member is moved to said other axial direction, it is possible to perform the shift operation to the highest speed stage and the shift operation to the reverse stage after a same select operation and thus possible to simplify both the gear shift operation and the select pattern.

According to the present invention of claim 4, since the moderation means is arranged between the reverse lever and the base member for applying moderation feeling of the rotational swing motion of the reverse lever, it is possible to improve the assembly workability of assembly of the shift fork module relative to the gear module.

According to the present invention of claim 5, since the shift fork shafts are provided with respective engagement portions which can engage a gear shift member of the transmission in accordance with the gear shift operation and also provided with a holding member for covering the side faces of the engagement portions to hold it at a predetermined position, it is possible to prevent the engagement portions provided on the shift fork shaft from being bent laterally and thus the engagement of the engagement portions with the gear shift member of the transmission from becoming difficult.

According to the present invention of claim 1, since the reverse lever is rotationally mounted on a mounting plate and the mounting plate is secured on the base member, it is possible to improve the mounting accuracy of the reverse lever relative to the base member and thus to more smoothly and exactly operate the reverse idle gear.

According to the present invention of claim 6, since the moderation mechanism is mounted on the base member, the moderation mechanism comprises positioning means for positioning the axial positions of the shift fork shafts with the positioning means being fitted in recesses formed on predetermined positions of the shift fork shafts and urging means for normally urging the positioning means toward the shift fork shafts, and wherein said mounting plate is mounted on the base member so as to prevent the urging means from being fallen off, it is possible to eliminate a separate means for preventing falling off of the urging means and additionally to reduce the number of parts.

### Brief Description of the Drawings

[Fig.1] A wholly schematic view showing the inside structure of a transmission to which a shift fork module of a transmission of a first preferable embodiment is applied;
[Fig. 2] A perspective view showing the shift fork module of Fig. 1;
[Fig.3] A front elevation view showing the shift fork module of Fig. 1;
[Fig.4] A plan view showing the shift fork module of Fig. 1;
[Fig.5] A cross-section view taken along a V-V line in Fig. 4;
[Fig.6] A plan view and a back-side view showing a base member of the shift fork module of Fig. 1;
[Fig.7] A plan view showing a reverse lever mounted on the shift fork module;
[Fig.8] A cross-section view taken along a VIII-VIII line in Fig. 7;
[Fig.9] A plan view showing operations of the reverse lever;
[Fig.10] A perspective view showing a gear module to which the shift fork module of the transmission of the present invention is applied;
[Fig.11] A perspective view showing a state in which the shift fork module of the transmission of the present invention is assembled to the gear module;
[Fig.12] A perspective view showing a shift fork module of a transmission of a second preferable embodiment of the present invention;
[Fig.13] A front elevation view showing the shift fork module of Fig. 12;
[Fig.14] A plan view showing the shift fork module of Fig. 12;
[Fig.15] A cross-section view taken along a XV-XV line in Fig.13;
[Fig.16] A plan view showing a reverse lever mounted on the shift fork module;
[Fig.17] A front elevation view showing a shift fork shaft mounted on the shift fork module; and
[Fig.18] A front elevation view showing a shift fork shaft mounted on the shift fork module.

### Preferable modes for carrying out the Invention

Preferable modes for carrying out the present invention will be hereinafter described with reference to the accompanying drawings.

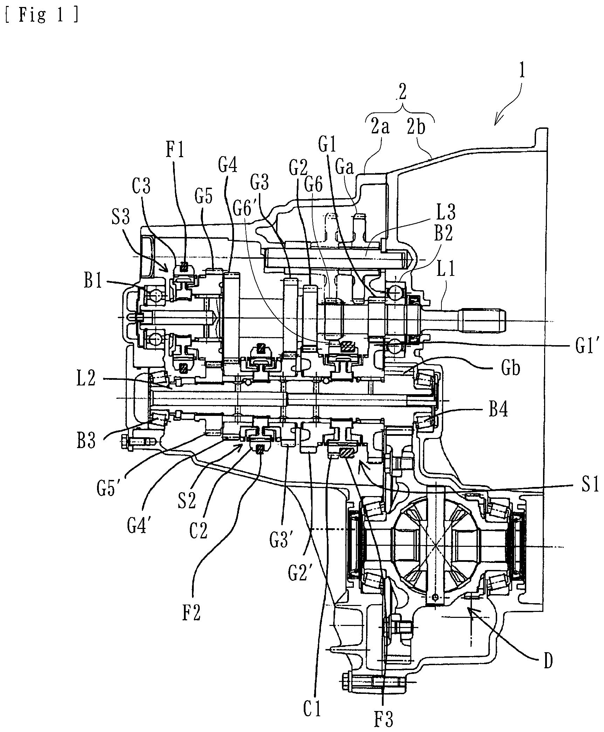

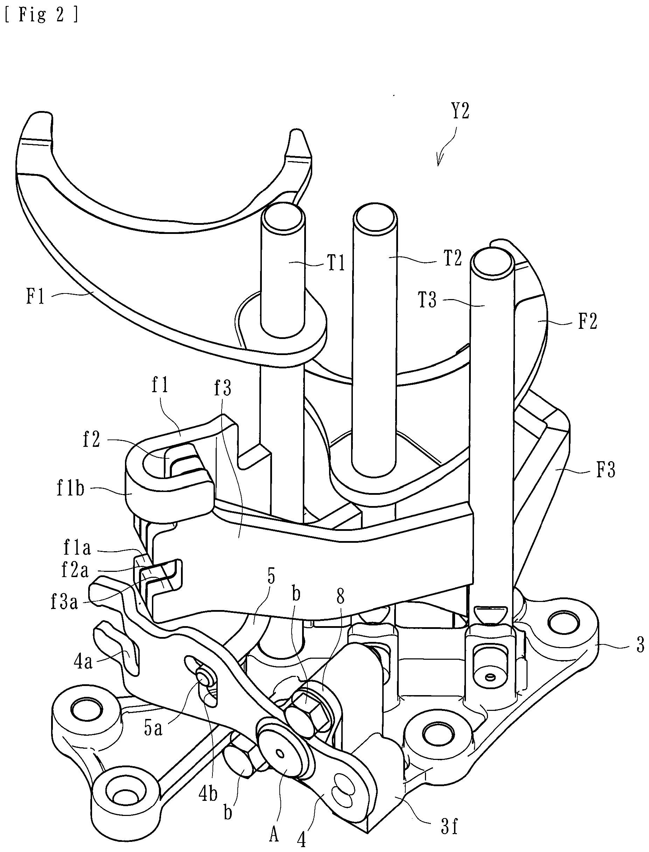

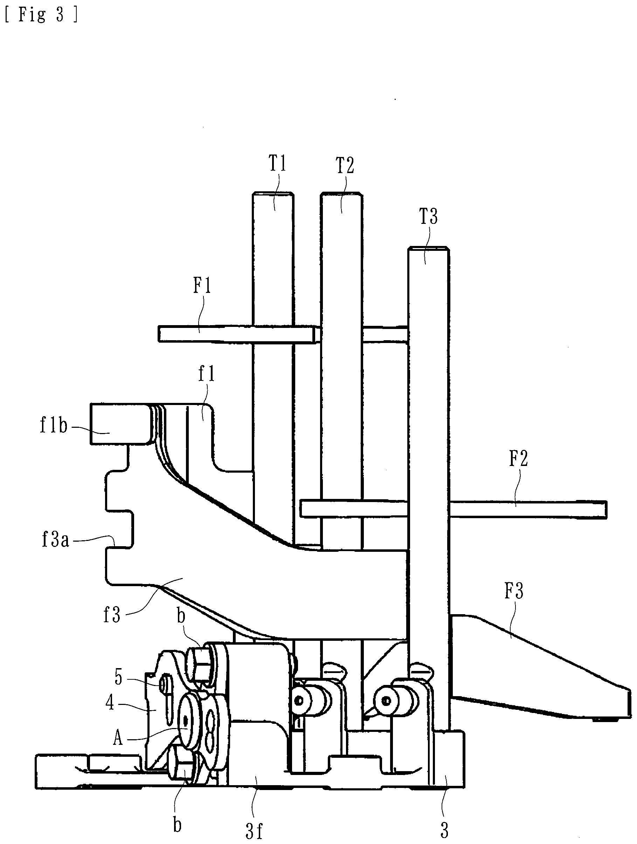

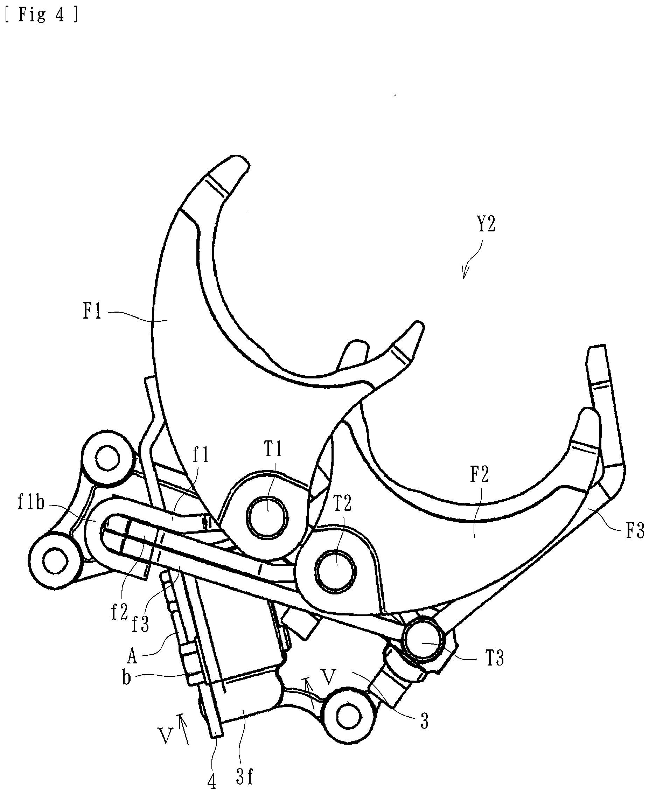

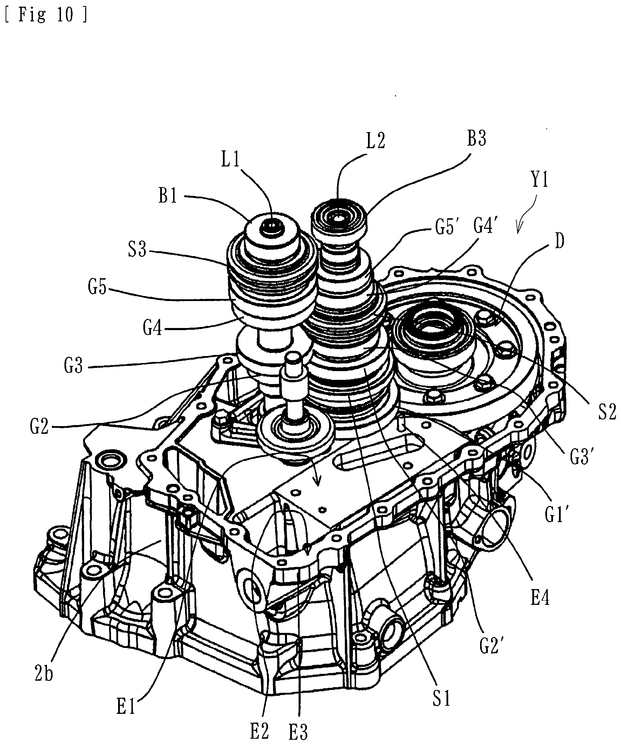

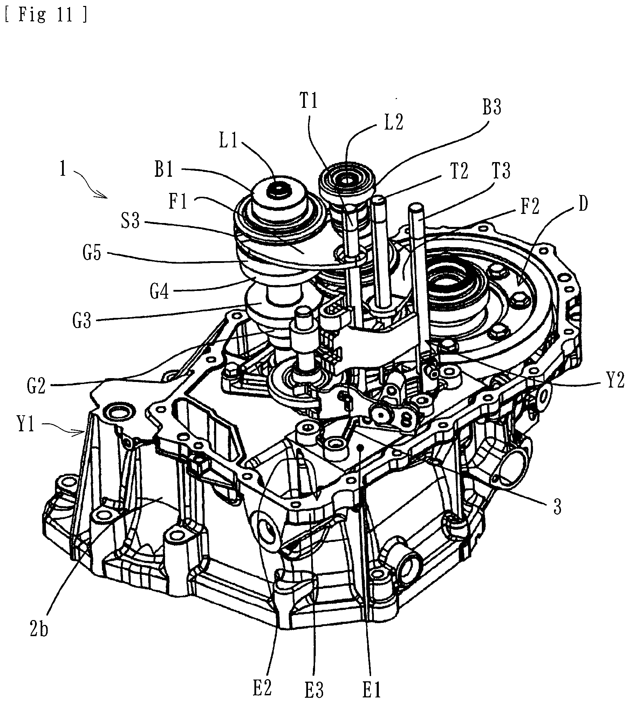

A transmission 1 to which the present embodiments (first and second embodiments) are applied is mounted on a vehicle such as an automobile and operated by a driver to get arbitrary gear shift stages and a reverse stage. As shown in Figs. 1 to 4, the transmission 1 comprising a gear module Y1 and a shift fork module Y2 is completed by assembling theshift fork module Y2 (Fig. 2) to thegear module Y1 (Fig. 10), in which an input shaft (1^{st} shaft) L1, a main shaft (2^{nd} shaft) L2 and a sub-shaft (3^{rd} shaft) L3 of the gear module Y1 are rotationally supported on a second case member element 2b and a plurality of the shift fork shafts T1 to T3 are slidably supported on a base member 3. The transmission 1 obtained by assembling the shift fork module Y2 to the gear module Y1 is shown in Fig. 11.

The second case member element 2b is assembled to a first case member element 2a to form a case member 2 of the transmission 1 to which a differential apparatus D is mounted. The transmission 1 of the present embodiment is constituted as a manually operated transmission mounted on a vehicle of a so-called FF (front engine and front drive) type in which the engine as a power source is installed transversely (width direction of a vehicle).

The input shaft L1 as the "1^{st} shaft" is a shaft member to which a driving power of a driving source (engine) of the vehicle is inputted and has a plurality of forward drive gears each having a diameter corresponding to a gear ratio (a 1^{st} speed drive gear G1, a 2^{nd} speed drive gear G2, a 3^{rd} speed drive gear G3, a 4^{th} speed drive gear G4 and a 5^{th} speed drive gear G5) and a reverse drive gear and rotationally supported at its opposite ends on the case member 2 via bearings B1, B2. A clutch (not shown) is connected to one end (right-side end in Fig. 1) of the input shaft L1 via the spline engagement.

The main shaft L2 as the "2^{nd} shaft" is a shaft member arranged in parallel with the input shaft L1 and having a plurality of forward driven gears (a 1^{st} speed driven gear G1', a 2^{nd} speed driven gear G2', a 3^{rd} speed driven gear G3', a 4^{th} speed driven gear G4' and a 5^{th} speed driven gear G5') and a reverse driven gear mated with the drive gears G1 to G5 and the reverse drive gear and rotationally supported at its opposite ends on the case member 2 via bearings B3, B4. An output gear Gb is formed integrally with the main shaft L2 on its one end (right-side end in Fig. 1).

In the present embodiments, the 1^{st} speed drive gear G1, the 2^{nd} speed drive gear G2, the 3^{rd} speed drive gear G3 and the 4^{th} speed drive gear G4 is secured on the input shaft L1 and the 5^{th} speed drive gear G5 is rotationally supported on the input shaft L1. On the other hand, the 1^{st} speed driven gear G1', the 2^{nd} speed driven gear G2', the 3^{rd} speed driven gear G3' and the 4^{th} speed driven gear G4' mating respectively with the 1^{st} speed drive gear G1, the 2^{nd} speed drive gear G2, the 3^{rd} speed drive gear G3 and the 4^{th} speed drive gear G4 are rotationally mounted on the main shaft L2 and the 5^{th} speed driven gear G5' mating with the 5^{th} speed drive gear G5 is secured on the main shaft L2.

A synchronizing apparatus S1 is mounted on the main shaft L2 between the 1^{st} speed driven gear G1' and the 2^{nd} speed driven gear G2' and a synchronizing apparatus S2 is mounted on the main shaft L2 between the 3^{rd} speed driven gear G3' and the 4^{th} speed driven gear G4'. In addition, a synchronizing apparatus S3 is mounted at a position adjacent to the 5^{th} speed driving gear G5 of the input shaft L1. Each of the synchronizing apparatus S1 to S3 comprises a synchronizing hub, a synchronizer ring and a clutch gear (these not shown) other than coupling sleeve C1 to C3.

That is, the synchronizing apparatus S1, S2 selectively synchronize the rotation of the 1^{st} speed driven gear G1' or the 2^{nd} speed driven gear G2' and the rotation of the 3^{rd} speed driven gear G3' or the 4^{th} speed driven gear G4' to the rotation of the main shaft L2 and the synchronizing apparatus S3 selectively synchronizes the rotation of the 5^{th} driving gear G5 to the rotation of input shaft L1. Accordingly, it is possible to selectively synchronize the rotation of the driving gear or the driven gear for transmitting the driving power from the input shaft L1 to the main shaft L2 to the rotation of the main shaft L2 or the input shaft L1. These synchronizing apparatus S1 to S3 constitute the "stator members" of the present invention.

The sub-shaft L3 as the "3^{rd} shaft" is arranged in parallel with the input shaft L1 and the main shaft L2 and rotated with being mated with the reverse drive gear and the reverse driven gear when gear shifted to the reverse stage to reverse the rotation of the input shaft (1^{st} shaft) L1. More particularly, the sub-shaft L3 comprises a shaft member secured on the case member 2 at its both ends and having a reverse idle gear Ga for reversing the rotation of the input shaft L1 and transmitting the driving power to the main shaft L2 with being mated with a driving gear G6 on the input shaft L1 and a driven gear G6' on the main shaft L2 when gear shifted to the reverse stage. The reverse idle gear Ga is supported on the sub-shaft L3 rotationally and axially slidably (left and right directions in Fig. 1) relative to the sub-shaft L3 and able to move between a state (shown by a two-dot chain line) in which the reverse idle gear Ga is mated with the drive gear G6 and the driven gear G6' and a state (shown by a solid line) in which the reverse idle gear Ga is not mated with the drive gear G6 and the driven gear G6'.

As shown in Figs. 2 to 4, the shift fork module Y2 of the first embodiment comprises the shift fork shafts T1, T2, T3, the base member 3, the reverse lever 4 and the operation member 5. The shift fork shafts T1, T2, T3 can move the stator members (i.e. synchronizing apparatus S3, S2, S1) to an arbitrary forward drive gear or forward driven gear to select the forward drive gear or forward driven gear for transmitting the driving power from the 1^{st} shaft (input shaft) L1 to the 2^{nd} shaft (main shaft) L2. More particularly, the shift forks F1, F2, F3 engaging respective synchronizing apparatus are mounted on the shift fork shafts T1, T2, T3 and able to select the drive gears or the driven gears for transmitting the driving power from the input shaft L1 to the main shaft L2 by moving the synchronizing apparatus S1, S2, S3 to arbitrary drive gears or the driven gears when performing gear shift operation. Accordingly, the engine rotation can be transmitted to the wheel side at a gear ratio corresponding to the selected drive gear and the driven gear.

The plurality (three in the illustrated embodiment) of the shift fork shafts T1 to T3 are formed with engagement portions f1a, f2a, f3a respectively for engaging with a gear shift member (not shown) operated in accordance with the gear shift operation. These engagement portions f1a, f2a, f3a comprise notches formed on extended portions f1, f2, f3 respectively extended from the shift fork shafts T1 to T3 and are constituted so that they allow movement of the gear shift member of the transmission when a gear shift lever (not shown) is operated and that they let any one of the engagement portions f1a, f2a, f3a selected by the gear shift operation engage the gear shift member when the gear shift lever is operated to axially move the shift fork shaft T1, T2, T3 on which any one of the engagement portions f1a, f2a, f3a is formed.

According to the illustrated embodiment, the engagement portions f1a, f2a, f3a of the extended portions f1, f2, f3 are stacked each other and the extended portion f1 from the shift fork shaft T1 is further extended to the side face of the extended portion f3 to form a holding member f1b for covering the extended portions f2, f3 and holding them at a predetermined position. This makes it possible to prevent the engagement portions f1a, f2a, f3a from being bent laterally and engagement of the engagement portions f1a, f2a, f3a with the gear shift member from becoming difficult.

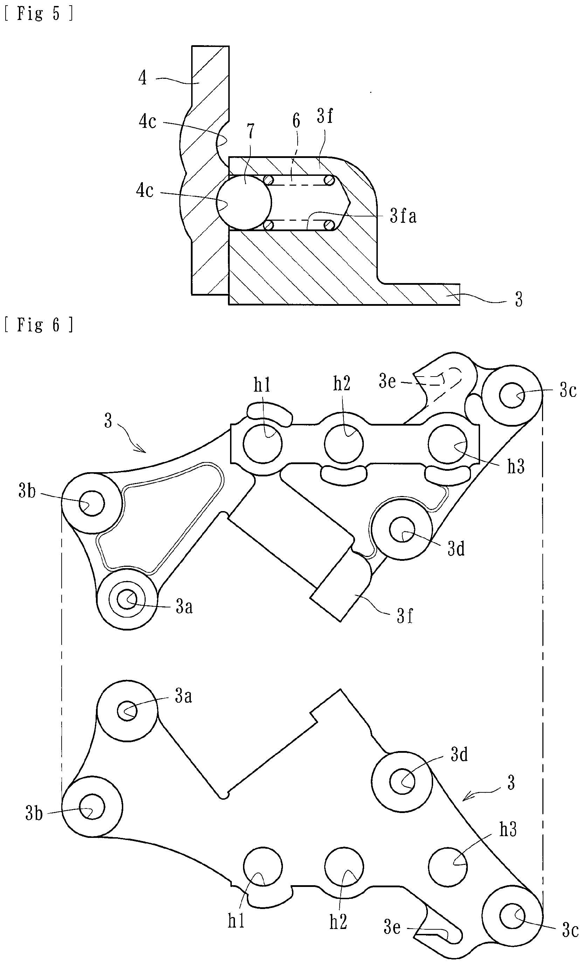

As shown in Fig. 6, the base member 3 forming a base of the shift fork module Y2 is formed with through holes h1, h2, h3 for inserting the shift fork shafts T1, T2, T3 and slidably supporting them. In addition, the base member 3 is formed with a plurality of through holes 3a to 3d on edge portions of the base member 3 for inserting bolts for securing the shift fork module Y2 to the gear module Y1.

Furthermore, the base member 3 is formed with a guiding groove 3e. The guiding groove 3e is able to engage a projection E4 (Fig. 10) formed on a mounting surface E1 of the gear module Y1 for mounting the base member 3 of the shift fork module Y2 and structured to guide and position the base member 3 at a predetermined position when the shift fork module Y2 is assembled to the gear module Y1. An upper surface E2 of an edge portion E3 of the second case member element 2b formed so that it is flush with the mounting surface E1 of the base member 3 to prevent the base member 3 guided by the projection E4 from being interfered with the edge portion E3.

As shown in Fig. 2, the operation member 5 comprises a bar member secured at its base end on the shift fork shaft T1 and being bent toward its tip end 5a and is operated when the gear shift lever (not shown) is operated to the reverse stage. That is, the operation member 5 is mounted on a high speed stage shift fork shaft T1 of the shift fork shafts T1 to T3 on which a shift fork F1 for the highest speed stage is mounted and constituted so that it is moved to one axial direction of the high speed stage shift fork shaft T1 when the gear shift operation is performed to the reverse stage and on the contrary moved to the other axial direction of the high speed stage shift fork shaft T1 when the gear shift operation is performed to the highest speed stage. More particularly, the shift fork shaft is constituted so that it is slid to one direction from its initial position when the gear shift lever is operated to the 5^{th} speed stage to secure the 5^{th} drive gear G5 on the input shaft L1 with moving the synchronizing apparatus S3, on the other hand, it is slid to the other direction from its initial position when the gear shift lever is operated to the reverse stage to rotationally swing the reverse lever 4.

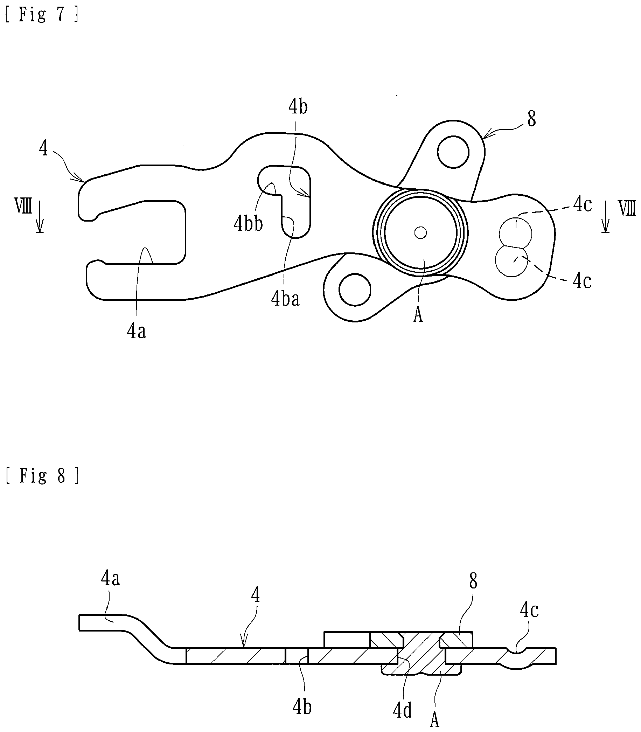

The reverse lever 4 is assembled so that its one end engages the reverse idle gear Ga of the gear module Y1 and its central portion is connected to the operation member 5 and operates to switch the reverse idle gear Ga between a state in which it is mated with the reverse drive gear G6 and the reverse driven gear G6' and a state in which it is not mated with the reverse drive gear G6 and the reverse driven gear G6' due to operation of the operation member 5. That is, the reverse lever 4 is rotationally swung when the operation member 5 is moved to one direction to switch the reverse idle gear Ga is mated with the reverse drive gear G6 and the reverse driven gear G6' and a state in which the reverse idle gear Ga is not mated with the reverse drive gear G6 and the reverse driven gear G6' and the reverse lever 4 is not rotationally swung when the operation member 5 is moved to the other direction. More particularly as shown in Figs. 7 and 8, the reverse lever 4 comprises a plate member having an engagement portion 4a engageable with the reverse idle gear Ga, an insertion hole 4b for passing the tip end 5a of the operation member 5 therethrough, a pair of recesses 4c formed on a back surface of the reverse lever 4 and an insertion hole 4d (Fig. 8) for passing a shaft member "A" therethrough.

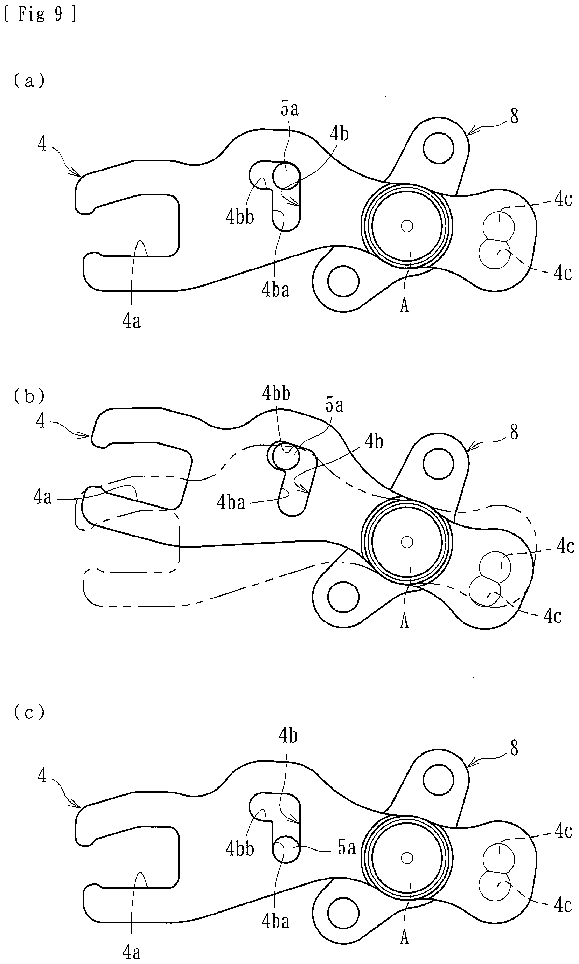

The engagement portion 4a comprises a notch of "C" shaped configuration engageable with the reverse idle gear Ga by a sandwiching fashion. As shown in Fig. 9, the insertion hole 4b comprises a "L" shaped hole through which the tip end 5a of the operation member 5 can be passed and has a hole 4ba extending to one direction and a hole 4bb extending to the other direction at substantially right angle to the hole 4ba. The shaft member "A" passed through the insertion hole 4d is secured on a mounting plate 8 on which the reverse lever 4 is laid and constitutes a pivotal shaft of the reverse lever 4. The mounting plate 8 is secured on a mounting portion 3f (Fig. 6) of the base member 3 at its opposite ends by bolts "b" (Fig. 2). Since the reverse lever 4 is swingably mounted on the mounting plate 8 and the mounting plate 8 is secured on the base member 3, it is possible to improve the mounting accuracy of the reverse lever 4 relative to the base member 3 and also possible to more smoothly and exactly operate the reverse idle gear Ga.

When the gear shift lever is operated to the reverse stage and the shift fork shaft T1 is slid from its initial position to its other direction (upper direction in Fig. 2), since the tip end 5a of the operation member 5 is moved along the hole 4bb with pushing the opening edge of the insertion hole 4b, the reverse lever 4 positioned in the initial position (Fig. 9(a)) is swung to the clockwise direction around the shaft member "A" and occupies a position shown in Fig. 9(b). Thus, the reverse idle gear Ga engaged with the engagement portion 4a is moved from the position shown by the solid line to the position shown by the chain line in Fig. 1 and mated with the drive gear G6 and the driven gear G6' to occupy the state for reversing the vehicle.

On the other hand, when returning the gear shift lever positioned at the reverse stage to slide the shift fork shaft T1 to the initial position, since the tip end 5a of the operation member 5 is moved to the initial position along the hole 4bb with pushing the opening edge of the insertion hole 4b to the opposite direction, the reverse lever 4 is swung to the opposite direction around the shaft member "A" and returned to the initial position shown in Fig. 9(a). Thus, the reverse idle gear Ga engaged with the engagement portion 4a is moved from the position shown by the chain line to the position shown by the solid line in Fig. 1 and occupies the state not mated with the drive gear G6 and the driven gear G6'. In this case, when the gear shift lever is operated to slide the shift fork shaft T1 from the initial position to one direction (lower direction in Fig. 2), since the tip end 5a of the operation member 5 is moved along the hole 4ba of the insertion hole 4b, the reverse lever 4 is not swung (Fig. 9(c)).

As described above, the reverse lever 4 is adapted to be swung by actuation of the operation member 5 and switched between a state in which it is mated with the reverse drive gear G6 and the reverse driven gear G6' and a state in which it is not mated with the reverse drive gear G6 and the reverse driven gear G6'. In addition, a moderation means is arranged between the reverse lever 4 and the base member 3 for applying moderation feeling of the rotational swing motion of the reverse lever 4.

As shown in Fig. 5, the moderation means is constituted so that a spring 6 and a steel ball 7 are inserted into a holding bore 3fa formed in the mounting portion 3f and the steel ball 7 urged by the spring 6 can be fitted in recesses 4c formed on the reverse lever 4. The moderation feeling can be obtained by a structure in which the steel ball 7 is fitted in one recess 4c when the reverse lever 4 is in the initial position (Fig. 9(a)) and the steel ball 7 is fitted in the other recess 4c when the reverse lever 4 is in the swung position (Fig. 9(b)) to the clockwise direction.

According to the present embodiment, the shift fork module Y2 of the transmission can be assembled to the gear module Y1 by engaging the plurality of shift forks F1 to F3 with corresponding synchronizing apparatus S1 to S3 respectively. That is, the plurality of shift forks F1 to F3 can be engaged with and thus assembled to the corresponding synchronizing apparatus S1 to S3 by matching the guiding groove 3e (Fig. 6) formed on the base member 3 of the fork module Y2 and the projection E4 (Fig. 10) formed on the gear module Y1 and then by sliding the fork module Y2 along the guiding groove 3e until the projection E4 abuts against a terminal end of the guiding groove 3e.

As described above, the reverse lever 4 of the present embodiment is mounted on the shift fork module Y2 with being connected to the operation member 5 and the engagement portion 4a of the reverse lever 4 is adapted to be engaged with the reverse idle gear Ga when the shift fork module Y2 is assembled to the gear module Y1. Since the reverse lever 4 is mounted on the shift fork module Y2 with being connected to the operation member 5, it is possible to carry out the assembly of both the modules Y1, Y2 with the plurality of shift forks F1 to F3 being engaged with corresponding synchronizing apparatus (stator members) S1 to S3 as well as to easily engage the reverse lever 4 with the idle reverse gear Ga. This makes it possible to improve the assembly workability of the shift fork module Y2 to the gear module Y1.

Since the reverse lever 4 of the present embodiment is constituted so that it is pivotably supported on the base member 3 and swung by operation of the operation member 5 and able to switch the reverse idle gear Ga between the state in which it is mated with the reverse drive gear G6 and the reverse driven gear G6' and the state in which it is not mated with the reverse drive gear G6 and the reverse driven gear G6', it is possible to achieve the operation of the reverse lever 4 by a simple structure. In addition, since the operation member 5 of the present embodiment is mounted on a high speed stage shift fork shaft T1 of the shift fork shafts T1 to T3 on which a shift fork F1 for the highest speed stage is mounted, the operation member 5 is moved to one axial direction of the high speed stage shift fork shaft T1 when the gear shift operation is performed to the reverse stage and on the contrary moved to the other axial direction of the high speed stage shift fork shaft T1 when the gear shift operation is performed to the highest speed stage, and the reverse lever 4 is constituted so that it is rotationally swung to switch the reverse idle gear Ga between a state in which it is mated with the reverse drive gear G6 and the reverse driven gear G6' and a state in which it is not mated with the reverse drive gear G6 and the reverse driven gear G6' when the operation member 5 is moved to said one axial direction and that it is not rotationally swung when the operation member 5 is moved to said other axial direction, the gear shift operations to the highest speed stage and to the reverse stage can be performed after a same select operation and thus it is possible to simplify the gear shift pattern and the select pattern.

Furthermore, according to the present embodiment, since the reverse lever 4 is swung by operation of the operation member 5 and switches the reverse idle gear Ga between a state in which it is mated with the reverse drive gear G6 and the reverse driven gear G6' and a state in which it is not mated with the reverse drive gear G6 and the reverse driven gear G6' and a moderation means is arranged between the reverse lever 4 and the base member 3 for applying moderation feeling of the rotational swing motion of the reverse lever 4, it is possible to improve the assembly workability and achieve stable operation of the reverse lever 4.

Then, a second embodiment of the present invention will be described.

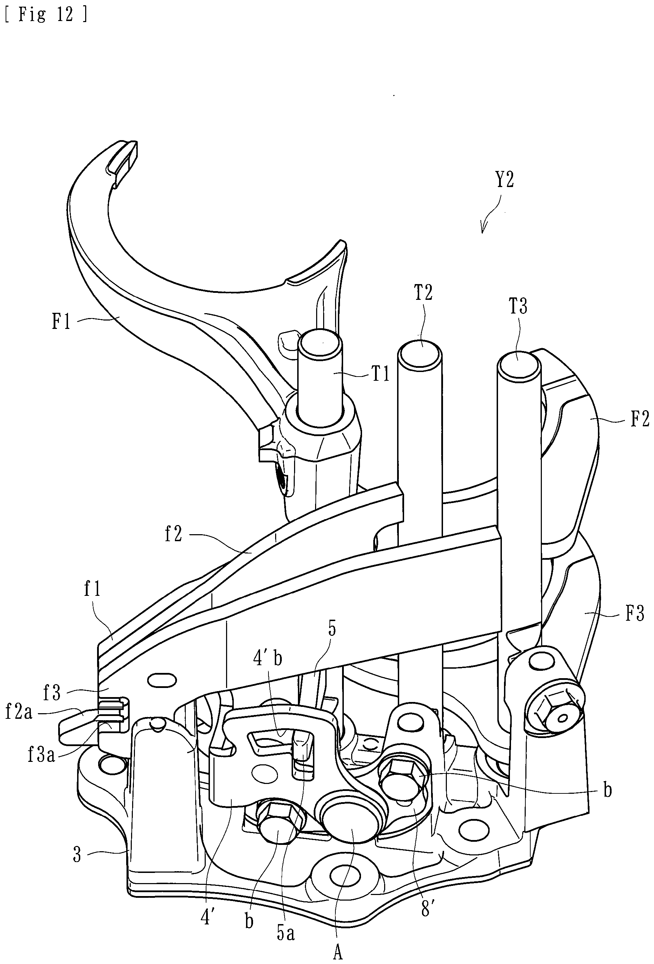

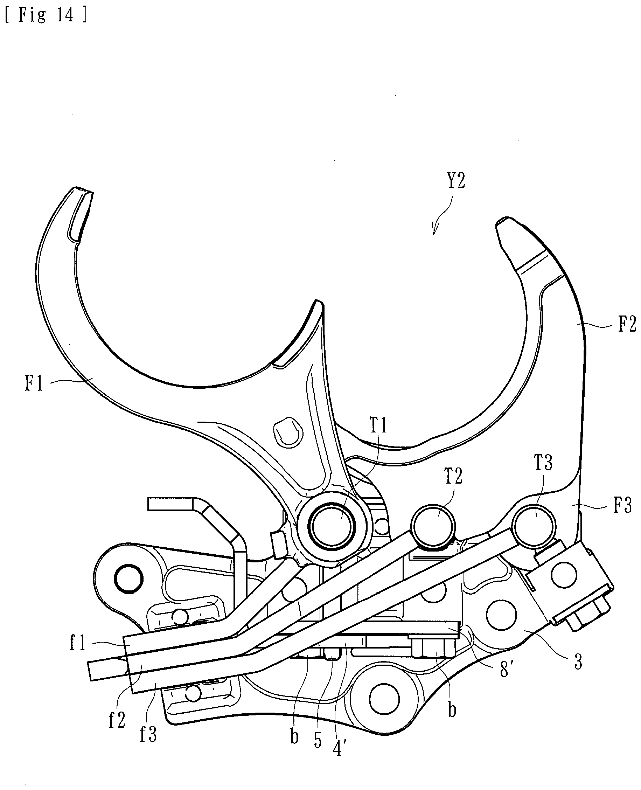

Similarly to the transmission comprising the shift fork module Y2 of the first embodiment, the transmission comprising the shift fork module Y2 of the second embodiment has the shift fork module Y2 also mounted on a gear module Y1 to complete a transmission and the transmission comprises the shift fork shafts T1, T2, T3, the base member 3, a reverse lever 4' and the operation member 5 as shown in Figs. 12 to 15. In the description of the second embodiment, detailed description of structural elements of the second embodiment having same reference numerals as those of the first embodiment will be omitted.

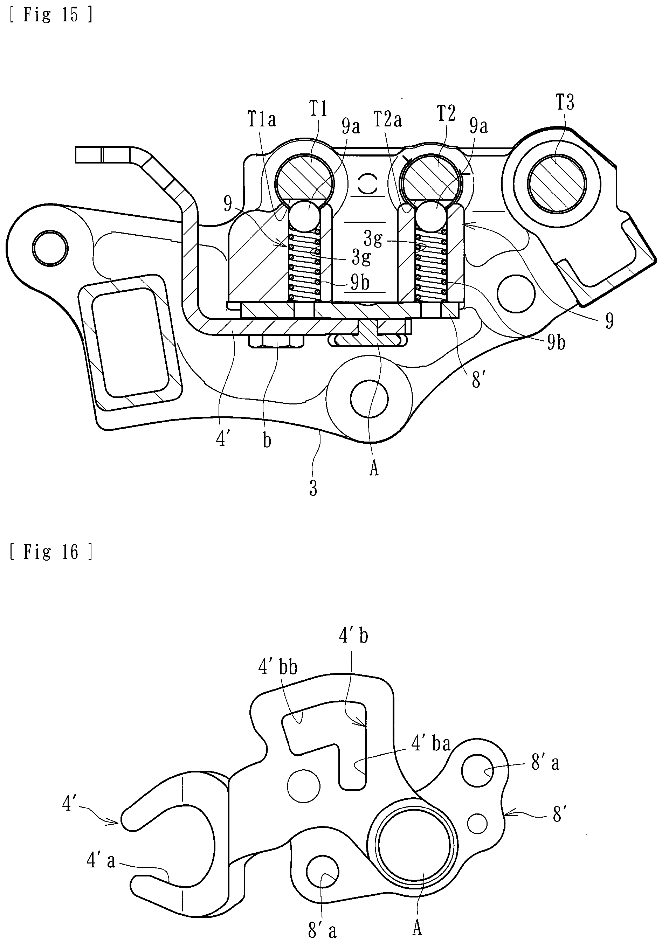

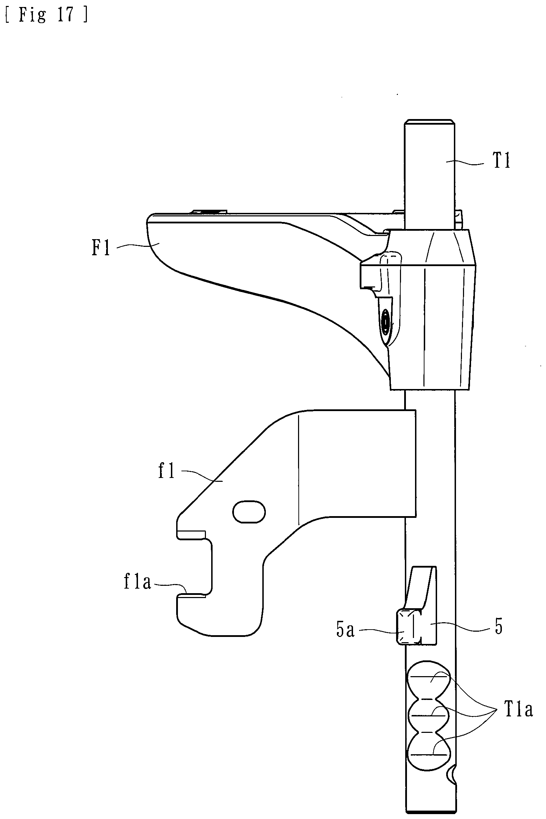

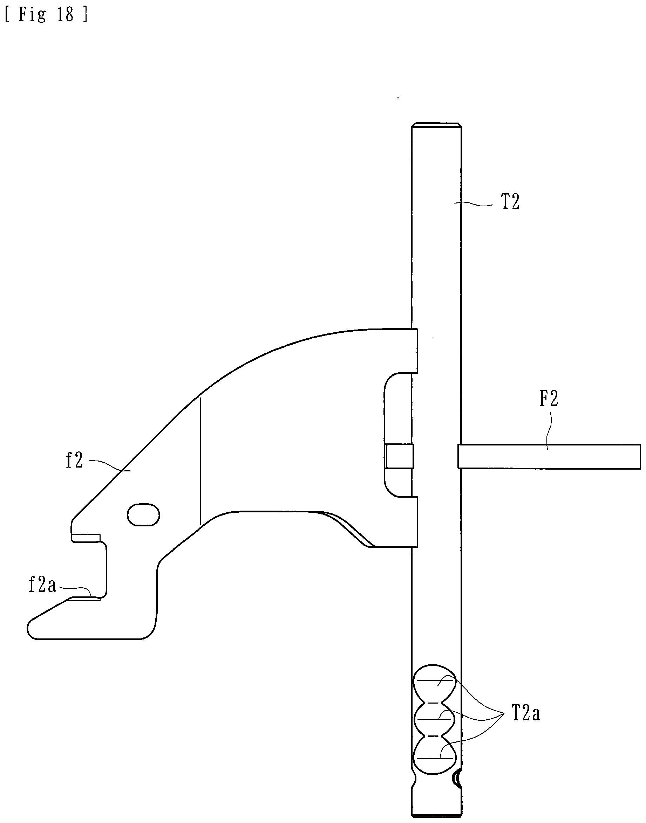

A moderation mechanism 9 (Fig. 15) for applying the moderation feeling in an axial movement and positioning of each of the shift fork shafts T1, T2 is arranged on the base member 3 by providing an axially formed plurality of recesses T1a, T2a at predetermined positions respectively on the shift fork shafts T1, T2 as shown in Figs. 17 and 18.

As shown in Fig. 15, the moderation mechanism 9 comprises a steel ball (positioning means) 9a fitted in any one of the plurality of recesses T1a or T2a formed on the shift fork shaft T1 or T2 respectively for performing the axial positioning of the shift for shaft T1 or T2, and a coil spring (urging means) 9b for urging each steel ball 9a toward each shift fork shaft T1 or T2. Each steel ball 9a and each coil spring 9b are held in a holding bore 3g formed in the base member 3.

Thus, it is possible to have the moderation feeling since the steel ball 9a rides over a land between the recesses T1a, T2a against the urging force of the coil spring 9b when the shift fork shafts T1, T2 are axially moved.

Similarly to the reverse lever 4 of the first embodiment, a reverse lever 4' of the second embodiment is rotationally swung when the operation member 5 is moved to one direction to switch the reverse idle gear Ga between a state in which the reverse idle gear Ga is mated with the reverse drive gear G6 and the reverse driven gear G6' and a state in which the reverse idle gear Ga is not mated with the reverse drive gear G6 and the reverse driven gear G6' and the reverse lever 4' is not rotationally swung when the operation member 5 is moved to the other direction. As shown in Fig. 16, the reverse lever 4' comprises a member having an engagement portion 4'a engageable with the reverse idle gear Ga and an insertion hole 4'b for passing the tip end 5a of the operation member 5 therethrough.

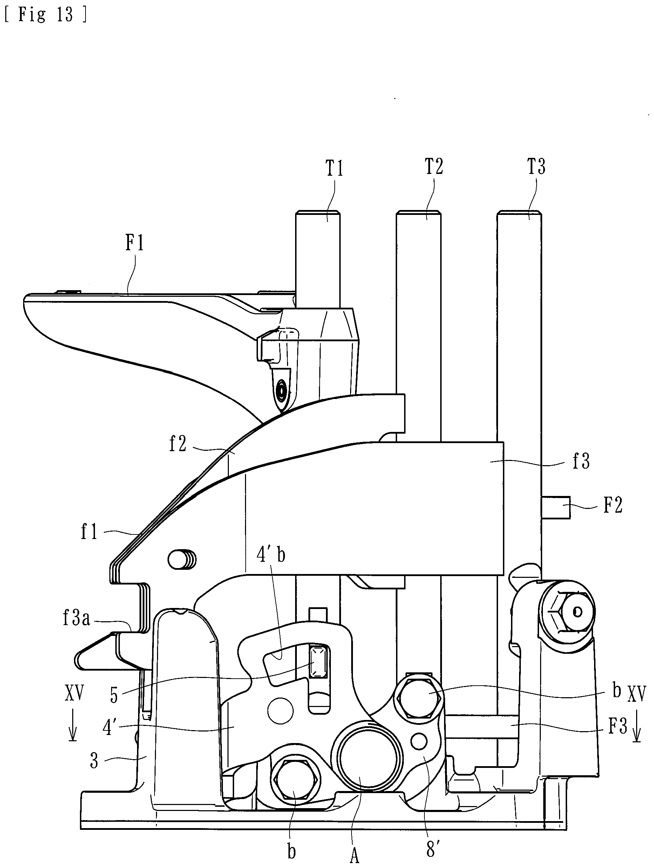

In the second embodiment, a cross-sectional configuration of the operation member 5 is rectangular and a configuration of outer corners of the insertion hole 4'b corresponds to the cross-sectional configuration of the operation member 5. This enables to have an effect that the shift fork shaft T1 on which the operation member 5 is secured can be easily stopped at the neutral position. In addition, according to the second embodiment, it is possible to increase the rotation angle of the reverse lever 4' and accordingly the moving amount of the engagement portion 4'a toward an upper direction in Fig. 16 when the shift fork shaft T1 strokes in the axial direction and accordingly the operation member 5 is moved upward in Fig. 13, since an angle formed by a hole edge 4'ba and a hole edge 4'bb is an acute angle.

The engagement portion 4'a comprises a notch of "C" shaped configuration engageable with the reverse idle gear Ga by a sandwiching fashion. The insertion hole 4'b comprises a "L" shaped hole through which the tip end 5a of the operation member 5 can be passed and has a hole 4'ba extending to one direction and a hole 4'bb extending to the other direction (extending substantially at right angle relative to the hole 4'ba). The shaft member "A" is secured on the mounting plate 8' on which the reverse lever 4' is laid and constitutes a pivot shaft. The mounting plate 8' is formed with holes 8'a at its opposite ends (see Fig. 16) and secured on the base member 3 at a predetermined position by fastening the bolts "b" passed through the holes 8'a.

Since the reverse lever 4' is swingably mounted on the mounting plate 8' and the mounting plate 8' is secured on the base member 3, it is possible to improve the mounting accuracy of the reverse lever 4' relative to the base member 3 and also possible to more smoothly and exactly operate the reverse idle gear Ga.

As shown in Fig. 15, the mounting plate 8' is mounted on the base member 3 so as to prevent the coil springs (urging means) 9b, 9b from being fallen off. That is, since one end of each coil spring 9b contacts the steel ball 9a and its other end abuts against the mounting plate 8', the mounting plate 8' is constituted so that it prevents the coil springs 9b, 9b from being fallen off and receives the urging force of the coil springs 9b, 9b.

As described above, since the moderation mechanism 9 is mounted on the base member 3, the moderation mechanism 9 comprises positioning means 9a, 9a for positioning the axial positions of the shift fork shafts T1, T2, the positioning means 9a, 9a are fitted in recesses T1a, T2a formed on predetermined positions of the shift fork shafts T1, T2 and urging means 9b, 9b normally urge the positioning means 9a, 9a toward the shift fork shafts T1, T2, and the mounting plate 8' is mounted on the base member 3 so as to prevent the urging means 9b, 9b from being fallen off, it is possible to eliminate a separate means for preventing falling off of the urging means and additionally to reduce the number of parts.

It is possible to use other type of positioning means in place of the positioning means 9a, 9a fitted in recesses T1a, T2a formed on predetermined positions of the shift fork shafts T1, T2 and also to use other type of urging means in place of the urging means 9b, 9b normally urge the positioning means 9a, 9a toward the shift fork shafts T1, T2.

### Description of Reference numerals

- 1: transmission
- 2: case member
- 2a: first case member element
- 2b: second case member element
- 3: base member
- 4, 4': reverse lever
- 5: operation member
- 6: spring
- 7: steel ball
- 8, 8': mounting plate
- 9: moderation mechanism
- 9a: steel ball (positioning means)
- 9b: coil spring (urging means)
- L1: input shaft (first shaft)
- L2: main shaft (second shaft)
- L3: sub-shaft (third shaft)
- G1 to G6: drive gear
- G1' to G6': driven gear
- Ga: reverse idle gear
- T1 to T3: shift fork shaft
- F1 to F3: shift fork
- S1 to S3: synchronizing apparatus (stator member)
- Y1: gear module
- Y2: shift fork module

## Claims

1. A transmission (1) comprising a gear module (Y1) and a shift fork module (Y2) with the shift fork module (Y2) to be mounted on the gear module (Y1) to complete the transmission (1) in which the gear module (Y1) comprises a 1^{st} shaft (L1) to which a driving power of a driving source of a vehicle is inputted and having a plurality of forward drive gears (G1 to G5) of different diameters corresponding to gear ratios and a reverse drive gear (G6); a 2^{nd} shaft (L2) having a plurality of forward driven gears (G1' to G5') and a reverse driven gear (G6') respectively mating with the forward drive gears (G1 to G5) and the reverse drive gear (G6); a plurality of stator members (S1 to S3) for selectably synchronizing the forward drive gears (G1 to G5) or reverse driven gear (G6') for transmitting the driving power from the 1^{st} shaft (L1) to the 2^{nd} shaft (L2); and a 3^{rd} shaft (L3) having a reverse idle gear (Ga) which can be mated with the reverse drive gear (G6) and reverse driven gear (G6') when performing a gear shift operation to a reverse stage and transmit the reversed driving rotation to the 2^{nd} shaft (L2); the 1^{st} shaft (L1), 2^{nd} shaft (L2) and 3^{rd} shaft (L3) being supported by a case member (2) formed by a second case member element (2b) assembled to a first case member element (2a),
wherein the shift fork module (Y2) comprises:
a plurality of shift fork shafts (T1 to T3) which are provided with shift forks (F1 to F3) engageable with respective stator members (S1 to S3) and can select the forward drive gears (G1 to G5) and forward driven gears (G1' to G5') transmitting the driving power from the 1^{st} shaft (L1) to the 2^{nd} shaft (L2) by moving the stator members (S1 to S3) to any one of the forward drive gears (G1 to G5) and forward driven gears (G1' to G5') when performing a gear shift operation;
an operation member (5) mounted on the shift fork shaft (T1) and operating when performing a gear shift operation to the reverse stage;
a reverse lever (4 or 4') connected to the operation member (5), one end of the reverse lever (4 or 4') engaging the reverse idle gear (Ga) when assembled to the gear module (Y1), and the reverse lever (4 or 4') being able to switch the reverse idle gear (Ga) between a state in which it is mated with the reverse drive gear (G6) and the reverse driven gear (G6') and a state in which it is not mated with the reverse drive gear (G6) and the reverse driven gear (G6');
a base member (3) for slidably supporting the shift fork shafts (T1 to T3),
wherein the reverse lever (4, 4') is rotationally mounted on a mounting plate (8, 8') and the mounting plate (8, 8') is secured on the base member (3);
**characterized in that**
the base member (3) is mounted on the second case member element (2b) of the case member (2), wherein the base member (3) is formed with a guiding groove (3e), wherein the guiding groove (3e) is able to engage a projection (E4) formed on a mounting surface (E1) of the gear module (Y1) for mounting the base member (3) and structured to guide and position the base member (3) at a predetermined position when the shift fork module (Y2) is assembled to the gear module (Y1), wherein an upper surface (E2) of an edge portion (E3) of the second case member element (2b) is formed so that it is flush with the mounting surface (E1) of the base member (3).

2. A transmission (1) of claim 1 wherein the reverse lever (4 or 4') is rotationally supported on the base member (3) and switches the reverse idle gear (Ga) between a state in which it is mated with the reverse drive gear (G6) and the reverse driven gear (G6') and a state in which it is not mated with the reverse drive gear (G6) and the reverse driven gear (G6') due to a rotational swing motion of the reverse lever (4 or 4') caused by the operation member (5).

3. A transmission (1) of claim 2 wherein the operation member (5) is mounted on a high speed stage shift fork shaft (T1) of the shift fork shafts (T1 to T3) on which a shift fork (F1) for the highest speed stage is mounted, the operation member (5) being moved to one axial direction of the high speed stage shift fork shaft (T1) when the gear shift operation is performed to the reverse stage and on the contrary moved to the other axial direction of the high speed stage shift fork shaft (T1) when the gear shift operation is performed to the highest speed stage; and
the reverse lever (4 or 4') is constituted so that it is rotationally swung to switch the reverse idle gear (Ga) between a state in which it is mated with the reverse drive gear (G6) and the reverse driven gear (G6') and a state in which it is not mated with the reverse drive gear (G6) and the reverse driven gear (G6') when the operation member (5) is moved to said one axial direction and that it is not rotationally swung when the operation member (5) is moved to said other axial direction.

4. A transmission (1) of any one of claims 1 to 3 wherein a moderation means is arranged between the reverse lever (4 or 4') and the base member (3) for applying moderation feeling of the rotational swing motion of the reverse lever (4 or 4).

5. A transmission (1) of any one of claims 1 to 4 wherein the shift fork shafts (T1 to T3) are provided with respective engagement portions (f1a, f2a, f3a) which can engage a gear shift member of the transmission in accordance with the gear shift operation and also provided with a holding member (f1b) for covering the side faces of the engagement portions (f2a, f3a) to hold it at a predetermined position.

6. A transmission (1) of claim 1 wherein a moderation mechanism (9) is mounted on the base member (3), the moderation mechanism (9) comprises positioning means (9a, 9a) for positioning the axial positions of the shift fork shafts (T1, T2) with the positioning means (9a, 9a) being fitted in recesses (T1a, T2a) formed on predetermined positions of the shift fork shafts (T1, T2) and urging means (9b, 9b) for normally urging the positioning means (9a, 9a) toward the shift fork shafts (T1, T2), and wherein said mounting plate (8') is mounted on the base member (3) so as to prevent the urging means (9b, 9b) from being fallen off.

## Patentansprüche

1. Getriebe (1), ein Getriebemodul (Y1) und ein Schaltgabelmodul (Y2) umfassend, wobei das Schaltgabelmodul (Y2) an dem Getriebemodul (Y1) zu montieren ist, um das Getriebe (1) zu komplettieren, in welchem das Getriebemodul (Y1) umfasst: eine erste Welle (L1), die mit einer Antriebskraft einer Antriebsquelle eines Fahrzeugs beaufschlagt wird und mehrere Vorwärtsgangtriebräder (G1 bis G5) unterschiedlichen Durchmessers entsprechend den Übersetzungsverhältnissen sowie ein Rückwärtsgangtriebrad (G6) aufweist; eine zweite Welle (L2), die mehrere angetriebene Vorwärtsgangräder (G1' bis G5') und ein angetriebenes Rückwärtsgangrad (G6') aufweist, die in die Vorwärtsgangtriebräder (G1 bis G5) beziehungsweise das Rückwärtsgangtriebrad (G6) eingreifen; eine Vielzahl von Statorteilen (S1 bis S3) zur auswählbaren Synchronisierung der Vorwärtsgangtriebräder (G1 bis G5) oder des angetriebenen Rückwärtsgangrades (G6') zur Übertragung der Antriebsleistung von der ersten Welle (L1) auf die zweite Welle (L2); und eine dritte Welle (L3), die ein Rückwärtsgang-Leerlaufrad (Ga) aufweist, das mit dem Rückwärtsgangtriebrad (G6) und dem angetriebenen Rückwärtsgangrad (G6') in Eingriff gebracht werden kann, wenn ein Gangschaltungsvorgang in eine Rückwärtsgangstufe durchgeführt und die Rückwärtsgang-Antriebsdrehbewegung auf die zweite Welle (L2) übertragen wird; wobei die erste Welle (L1), die zweite Welle (L2) und die dritte Welle (L3) durch ein Gehäuseteil (2) gestützt werden, das durch ein zweites Gehäuseteilelement (2b) gebildet wird, das an das erste Gehäuseteilelement (2a) angebaut wird,
wobei das Schaltgabelmodul (Y2) umfasst:
eine Vielzahl von Schaltgabelwellen (T1 bis T3), die mit Schaltgabeln (F1 bis F3) versehen sind, die in
entsprechende Statorteile (S1 bis S3) eingreifen können und die Vorwärtsgangtriebräder (G1 bis G5) auswählen können, und die angetriebenen Vorwärtsgangräder (G1' bis G5'), welche die Antriebsleistung von der ersten Welle (L1) auf die zweite Welle (L2) übertragen, indem sie die Statorteile (S1 bis S3) zu einem der Vorwärtsgangtriebräder (G1 bis G5) und angetriebenen Vorwärtsgangräder (G1' bis G5') hinbewegen, wenn ein Gangschaltungsvorgang durchgeführt wird;
ein Bedienelement (5), das an der Schaltgabelwelle (T1) montiert ist und einen Bedienvorgang ausführt, wenn ein Gangschaltungsvorgang in die Rückwärtsgangstufe durchgeführt wird;
einen Rückwärtsganghebel (4 oder 4'), der mit dem Bedienelement (5) verbunden ist, wobei ein Ende des Rückwärtsganghebels (4 oder 4') in das Rückwärtsgang-Leerlaufrad (Ga) eingreift, wenn es an dem Getriebemodul (Y1) montiert ist, und der Rückwärtsganghebel (4 oder 4') in der Lage ist, das Rückwärtsgang-Leerlaufrad (Ga) zwischen einem Zustand, in dem es in das Rückwärtsgangtriebrad (G6) und das angetriebene Rückwärtsgangrad (G6') eingreift, und einem Zustand, in dem es nicht in das Rückwärtsgangtriebrad (G6) und das angetriebene Rückwärtsgangrad (G6') eingreift, umzuschalten;
ein Basisteil (3) zum verschiebbaren Stützen der Schaltgabelwellen (T1 bis T3), wobei der Rückwärtsganghebel (4, 4') drehbar an einer Montageplatte (8, 8') montiert ist und die Montageplatte (8, 8') an dem Basisteil (3) befestigt ist;
**dadurch gekennzeichnet, dass**
das Basisteil (3) an dem zweiten Gehäuseteilelement (2b) des Gehäuseteils (2) montiert ist, wobei das Basisteil (3) mit einer Führungsnut (3e) ausgebildet ist, wobei die Führungsnut (3e) in einen Vorsprung (E4) eingreifen kann, der an einer Montageoberfläche (E1) des Getriebemoduls (Y1) zur Montage des Basisteils (3) ausgebildet ist, sowie zum Führen und Positionieren des Basisteils (3) an einer vorbestimmten Position angeordnet ist, wenn das Schaltgabelmodul (Y2) an dem Getriebemodul (Y1) montiert ist, wobei eine obere Oberfläche (E2) eines Kantenabschnitts (E3) des zweiten Gehäuseteilelements (2b) so ausgebildet ist, dass sie mit der Montageoberfläche (E1) des Basisteils (3) bündig abschließt.

2. Getriebe (1) nach Anspruch 1, wobei der Rückwärtsganghebel (4 oder 4') drehbar an dem Basisteil (3) gelagert wird und das Rückwärtsgang-Leerlaufrad (Ga) zwischen einem Zustand, in dem es in das Rückwärtsgangtriebrad (G6) und das angetriebene Rückwärtsgangrad (G6') eingreift, und einem Zustand, in dem es infolge einer Drehschwingbewegung des Rückwärtsganghebels (4 oder 4'), die vom Bedienelement (5) hervorgerufen wird, nicht in das Rückwärtsgangtriebrad (G6) und das angetriebene Rückwärtsgangrad (G6') eingreift, umschaltet.

3. Getriebe (1) nach Anspruch 2, wobei das Bedienelement (5) an einer Hochgeschwindigkeitsstufen-Schaltgabelwelle (T1) der Schaltgabelwellen (T1 bis T3) montiert ist, auf welcher eine Schaltgabel (F1) für die höchste Geschwindigkeitsstufe montiert ist, das Bedienelement (5) in eine Axialrichtung der Hochgeschwindigkeitsstufen-Schaltgabelwelle (T1) bewegt wird, wenn der Gangschaltungsvorgang in die Rückwärtsgangstufe durchgeführt wird, und im Gegensatz dazu in die andere Axialrichtung der Hochgeschwindigkeitsstufen-Schaltgabelwelle (T1) bewegt wird, wenn der Gangschaltungsvorgang in die höchste Geschwindigkeitsstufe durchgeführt wird; und der Rückwärtsganghebel (4 oder 4') so aufgebaut ist, dass er mit einer Drehschwingbewegung bewegt wird, um das Rückwärtsgang-Leerlaufrad (Ga) zwischen einem Zustand, in dem es in das Rückwärtsgangtriebrad (G6) und das angetriebene Rückwärtsgangrad (G6') eingreift, und einem Zustand, in dem es nicht in das Rückwärtsgangtriebrad (G6) und das angetriebene Rückwärtsgangrad (G6') eingreift, umzuschalten, wenn die Bedienkomponente (5) in die eine Axialrichtung bewegt wird, und dass er nicht mit einer Drehschwingbewegung bewegt wird, wenn die Bedienkomponente (5) in die andere Axialrichtung bewegt wird.

4. Getriebe (1) nach einem der Ansprüche 1 bis 3, wobei ein Dämpfungsmittel zwischen dem Rückwärtsganghebel (4 oder 4') und dem Basisteil (3) zur Anwendung eines Dämpfungsgefühls der Drehschwingbewegung des Rückwärtsganghebels (4 oder 4') angeordnet ist.

5. Getriebe (1) nach einem der Ansprüche 1 bis 4, wobei die Schaltgabelwellen (T1 bis T3) mit entsprechenden Eingriffsabschnitten (f1a, f2a, f3a) versehen sind, die gemäß des Gangschaltungsvorgangs in ein Gangschaltungselement des Getriebes eingreifen können und außerdem mit einem Halteglied (f1b) zur Abdeckung der Seitenflächen der Eingriffsabschnitte (f2a, f3a) versehen sind, um es an einer vorbestimmten Position zu halten.

6. Getriebe (1) nach Anspruch 1, wobei ein Dämpfungsmechanismus (9) an dem Basisteil (3) montiert ist, wobei der Dämpfungsmechanismus (9) Positionierungsmittel (9a, 9a) zur Positionierung der Axialpositionen der Schaltgabelwellen (T1, T2), wobei die Positionierungsmittel (9a, 9a) in Aussparungen (T1a, T2a) montiert sind, die an vorbestimmten Positionen der Schaltgabelwellen (T1, T2) ausgebildet sind, und Forcierungsmittel (9b, 9b) umfasst, um die Positionierungsmittel (9a, 9a) normalerweise zu den Schaltgabelwellen (T1, T2) hin zu forcieren, und wobei die Montageplatte (8') an dem Basisteil (3) montiert ist, um ein Abfallen der Forcierungsmittel (9b, 9b) zu verhindern.

## Revendications

1. Transmission (1) comprenant un module d'engrenages (Y1) et un module de fourche de changement de vitesse (Y2), le module de fourche de changement de vitesse (Y2) devant être monté sur le module d'engrenages (Y1) pour compléter la transmission (1) dans laquelle le module d'engrenages (Y1) comprend un 1^{er} arbre (L1) auquel est appliquée une puissance d'entraînement d'une source d'entraînement d'un véhicule et ayant une pluralité d'engrenages d'entraînement en avant (G1 à G5) de différents diamètres correspondant à des rapports d'engrenage et un engrenage d'entraînement en arrière (G6) ; un 2^{e} arbre (L2) ayant une pluralité d'engrenages entraînés en avant (G1' à G5') et un engrenage entraîné en arrière (G6') s'accouplant respectivement avec les engrenages d'entraînement en avant (G1 à G5) et l'engrenage d'entraînement en arrière (G6) ; une pluralité d'organes de stator (S1 à S3) pour synchroniser de manière sélective les engrenages d'entraînement en avant (G1 à G5) ou l'engrenage entraîné en arrière (G6') pour transmettre la puissance d'entraînement du 1^{er} arbre (L1) au 2^{e} arbre (L2) ; et un 3^{e} arbre (L3) ayant un engrenage de ralenti de marche arrière (Ga) qui peut être accouplé avec l'engrenage d'entraînement en avant (G6) et l'engrenage entraîné en arrière (G6') lors de l'exécution d'une opération de changement de vitesse vers un étage de marche arrière et transmettre la rotation d'entraînement inversée au 2^{e} arbre (L2) ; le 1^{er} arbre (L1), le 2^{e} arbre (L2) et le 3^{e} arbre (L3) étant supportés par un organe de boîtier (2) formé par un deuxième élément d'organe de boîtier (2b) assemblé à un premier élément d'organe de boîtier (2a),
où le module de fourche de changement de vitesse (Y2) comprend :
une pluralité d'arbres de fourche de changement de vitesse (T1 à T3) qui sont munis de fourches de changement de vitesse (F1 à F3) pouvant mettre en prise des organes de stator respectifs (S1 à S3) et sélectionner les vitesses d'entraînement en avant (G1 à G5) et les vitesses entraînées en avant (G1' à G5') transmettant la puissance d'entraînement du 1^{er} arbre (L1) au 2^{e} arbre (L2) en déplaçant les organes de stator (S1 à S3) vers l'une quelconque des vitesses d'entraînement en avant (G1 à G5) et des vitesses entraînées en avant (G1' à G5') lors de l'exécution d'une opération de changement de vitesse ;
un organe d'actionnement (5) monté sur l'arbre de fourche de changement de vitesse (T1) et fonctionnant lors de l'exécution d'une opération de changement de vitesse vers l'étage de marche arrière ;
un levier de marche arrière (4 ou 4') relié à l'organe d'actionnement (5), une extrémité du levier de marche arrière (4 ou 4') mettant en prise l'engrenage de ralenti de marche arrière (Ga) lorsqu'il est assemblé au module d'engrenages (Y1), et le levier de marche arrière (4 ou 4') étant apte à commuter l'engrenage de ralenti de marche arrière (Ga) entre un état dans lequel il est accouplé avec l'engrenage d'entraînement en arrière (G6) et l'engrenage entraîné en arrière (G6') et un état dans lequel il n'est pas accouplé avec l'engrenage d'entraînement en arrière (G6) et l'engrenage entraîné en arrière (G6') ;
un organe de base (3) pour supporter de manière coulissante les arbres de fourche de changement de vitesse (T1 à T3), où le levier de marche arrière (4, 4') est monté de manière rotative sur une plaque de montage (8, 8') et la plaque de montage (8, 8') est fixée sur l'organe de base (3) ;
**caractérisée en ce que** :
l'organe de base (3) est monté sur le second élément d'organe de boîtier (2b) de l'organe de boîtier (2), où l'organe de base (3) est formé avec une rainure de guidage (3e), où la rainure de guidage (3e) est apte à mettre en prise une saillie (E4) formée sur une surface de montage (E1) du module d'engrenages (Y1) pour monter l'organe de base (3) et structurée pour guider et positionner l'organe de base (3) à une position prédéterminée lorsque le module de fourche de changement de vitesse (Y2) est assemblé au module d'engrenages (Y1), où une surface supérieure (E2) d'une partie de bord (E3) du second élément d'organe de boîtier (2b) est formée de sorte qu'elle est de niveau avec la surface de montage (E1) de l'organe de base (3).

2. Transmission (1) de la revendication 1, où le levier de marche arrière (4 ou 4') est supporté de manière rotative sur l'organe de base (3) et commute l'engrenage de ralenti de marche arrière (Ga) entre un état dans lequel il est accouplé avec l'engrenage d'entraînement en arrière (G6) et l'engrenage entraîné en arrière (G6') et un état dans lequel il n'est pas accouplé avec l'engrenage d'entraînement en arrière (G6) et l'engrenage entraîné en arrière (G6') en raison d'un mouvement d'oscillation en rotation du levier de marche arrière (4 ou 4') provoqué par l'organe d'actionnement (5).

3. Transmission (1) de la revendication 2, où l'organe d'actionnement (5) est monté sur un arbre de fourche de changement de vitesse d'étage de vitesse élevée (T1) des arbres de fourche de changement de vitesse (T1 à T3) sur lesquels une fourche de changement de vitesse (F1) pour l'étage de la vitesse la plus élevée est montée, l'organe d'actionnement (5) étant déplacé vers une direction axiale de l'arbre de fourche de changement de vitesse d'étage de vitesse élevée (T1) lorsque l'opération de changement de vitesse est effectuée vers l'étage de marche arrière et au contraire déplacé vers l'autre direction axiale de l'arbre de fourche de changement de vitesse d'étage de vitesse élevée (T1) lorsque l'opération de changement de vitesse est effectuée vers l'étage de la vitesse la plus élevée ; et le levier de marche arrière (4 ou 4') est constitué de telle sorte qu'il est pivoté de manière rotative pour commuter l'engrenage de ralenti de marche arrière (Ga) entre un état dans lequel il est accouplé avec l'engrenage d'entraînement en arrière (G6) et l'engrenage entraîné en arrière (G6') et un état dans lequel il n'est pas accouplé avec l'engrenage d'entraînement en arrière (G6) et l'engrenage entraîné en arrière (G6') lorsque l'organe d'actionnement (5) est déplacé vers ladite une direction axiale et qu'il n'est pas pivoté de manière rotative lorsque l'organe d'actionnement (5) est déplacé vers ladite autre direction axiale.

4. Transmission (1) de l'une quelconque des revendications 1 à 3, où un moyen de modération est disposé entre le levier de marche arrière (4 ou 4') et l'organe de base (3) pour appliquer une sensation de modération du mouvement d'oscillation en rotation du levier de marche arrière (4 ou 4').

5. Transmission (1) de l'une quelconque des revendications 1 à 4, où les arbres de fourche de changement de vitesse (T1 à T3) sont munis de parties de mise en prise respectives (f1a, f2a, f3a) qui peuvent mettre en prise un organe de changement de vitesse de la transmission selon l'opération de changement de vitesse et également munis d'un organe de maintien (f1b) pour couvrir les faces latérales des parties de mise en prise (f2a, f3a) afin de les maintenir dans une position prédéterminée.

6. Transmission (1) de la revendication 1, où un mécanisme de modération (9) est monté sur l'organe de base (3), le mécanisme de modération (9) comprend des moyens de positionnement (9a, 9a) pour positionner les positions axiales des arbres de fourche de changement de vitesse (T1, T2), les moyens de positionnement (9a, 9a) étant ajustés dans des évidements (T1a, T2a) formés sur des positions prédéterminées des arbres de fourche de changement de vitesse (T1, T2) et des moyens de poussée (9b, 9b) pour pousser normalement les moyens de positionnement (9a, 9a) vers les arbres de fourche de changement de vitesse (T1, T2), et où ladite plaque de montage (8') est montée sur l'organe de base (3) de manière à empêcher les moyens de poussée (9b, 9b) de tomber.
